**Europäisches Patentamt**

**European Patent Office**

**Office européen des brevets**

(19)

(11) Veröffentlichungsnummer: **0 169 389**
**B1**

(12) **EUROPÄISCHE PATENTSCHRIFT**

(45) Veröffentlichungstag der Patentschrift:
**31.01.90**

(51) Int. Cl.⁴: **H 04 B 1/66**

(21) Anmeldenummer: **85107778.4**

(22) Anmeldetag: **24.06.85**

(54) Verfahren zum Übertragen zweier unabhängiger Informationsarten und Anordnung zur Durchführung des Verfahrens.

(30) Priorität: **29.06.84 DE 3424037**

(43) Veröffentlichungstag der Anmeldung:
**29.01.86 Patentblatt 86/5**

(45) Bekanntmachung des Hinweises auf die Patenterteilung:
**31.01.90 Patentblatt 90/5**

(84) Benannte Vertragsstaaten:
**AT DE FR GB IT NL SE**

(56) Entgegenhaltungen:
**EP-A- 0 013 341**
**EP-A- 0 037 071**
**DE-C- 2 307 441**
**FR-A- 2 449 375**
**US-A- 3 860 760**

(73) Patentinhaber: **Siemens Aktiengesellschaft,**
**Wittelsbacherplatz 2, D-8000 München 2 (DE)**

(72) Erfinder: **Bardl, Artur, Dipl.-Ing. (FH),**
**Agnes-Bernauer-Strasse 26, D-8000 München 21 (DE)**
Erfinder: **Lindner, Manfred, Dipl.-Phys., Römerweg 8,**
**D-8025 Unterhaching (DE)**

## Beschreibung

Die Erfindung betrifft ein Verfahren zum Übertragen zweier unabhängiger Informationsarten nach dem Oberbegriff des Patentanspruchs 1 und eine Anordnung zur Durchführung dieses Verfahrens.

Bei der Übertragung von Signalen in einer Informationsart (z.B. analog) kann es erforderlich sein, unabhängige begleitende Signale in einer anderen Informationsart (z.B. digital) mit zu übertragen. Ein Beispiel für einen derartigen Anwendungsfall stellt eine Funkübertragungsstrecke in einem Telefonnetz dar. Dabei wird in der einen, analogen Informationsart die eigentliche Sprachinformation und in der anderen, digitalen Informationsart die Fernwirkinformation übertragen. Zur Fernwirkinformation gehören Zählerimpulse, Zählerstände, Alarme, Fernsteuersignale und ähnliches.

Aus der EP-A-0 037 071 ist ein gattungsgemäßes Verfahren bekannt, bei dem das Nutzsignal auf der Sendeseite in einen analogen Pufferspeicher eingelesen wird. Bei der Signalübertragung ist eine gleichmäßige Verteilung von Unterblöcken vorgesehen, die zu einer geringen zusätzlichen Laufzeit pro Sprechrichtung führt. Die Verwendung eines nicht gleichzeitig ein- und auslesbaren Speichers führt andererseits zu einer Verzögerung der Gruppenlaufzeit und zu einem fixedpattern-Rauschen.

Der Erfindung liegt die Aufgabe zugrunde, ein gegenüber dem Stand der Technik verbessertes Verfahren anzugeben.

Diese Aufgabe wird durch die im kennzeichnenden Teil des Anspruchs 1 beschriebenen Merkmale gelöst. Die Erfindung macht sich dabei das Prinzip der Zeitkompression und Zeitexpansion des einen Signals, z.B. des Analogsignals jeweils am Anfang bzw. am Ende der Übertragungsstrecke zu Nutze. Bei der Zeitkompression wird das Signal abschnittsweise in eine geringfügig höhere Frequenzlage gebracht, so daß nach jedem Abschnitt eine zeitliche Lücke verbleibt, in welche die anderen Signale, z.B. die digitalen Begleitsignale eingeblendet werden. Das Gemisch aus beiden Signalarten wird übertragen und am Ende der Strecke werden nach Entnehmen der Begleitsignale die einzelnen Abschnitte wieder aus der etwas höheren Frequenzlage in die ursprüngliche Frequenzlage gebracht und lückenlos aneinandergesetzt. Auf diese Weise wird für beide Signale der gleiche Übertragungsweg genutzt und beide Kanäle unterliegen identischen Übertragungsbedingungen.

Der Erfindung lag ferner die Aufgabe zugrunde, eine Anordnung zur Durchführung des Verfahrens zu geben. Diese Aufgabe wird durch die im Kennzeichen des Anspruchs 2 aufgeführten Merkmale gelöst.

Im folgenden wird die Erfindung anhand eines Ausführungsbeispieles weiter beschrieben.

Fig. 1 zeigt schematisch den Ablauf einer Zeitkompression.

Fig. 2 zeigt schematisch den Ablauf der Zeitexpansion.

Fig. 3 und 4 zeigen jeweils ein Blockschaltbild der Anordnung zur Durchführung der Kompression bzw. Expansion.

Fig. 4 bis 11 zeigen jeweils Einzelheiten der Anordnungen aus den Figuren 1 bis 3.

Fig. 12 zeigt schematisch eine Anordnung zur Durchführung des Verfahrens.

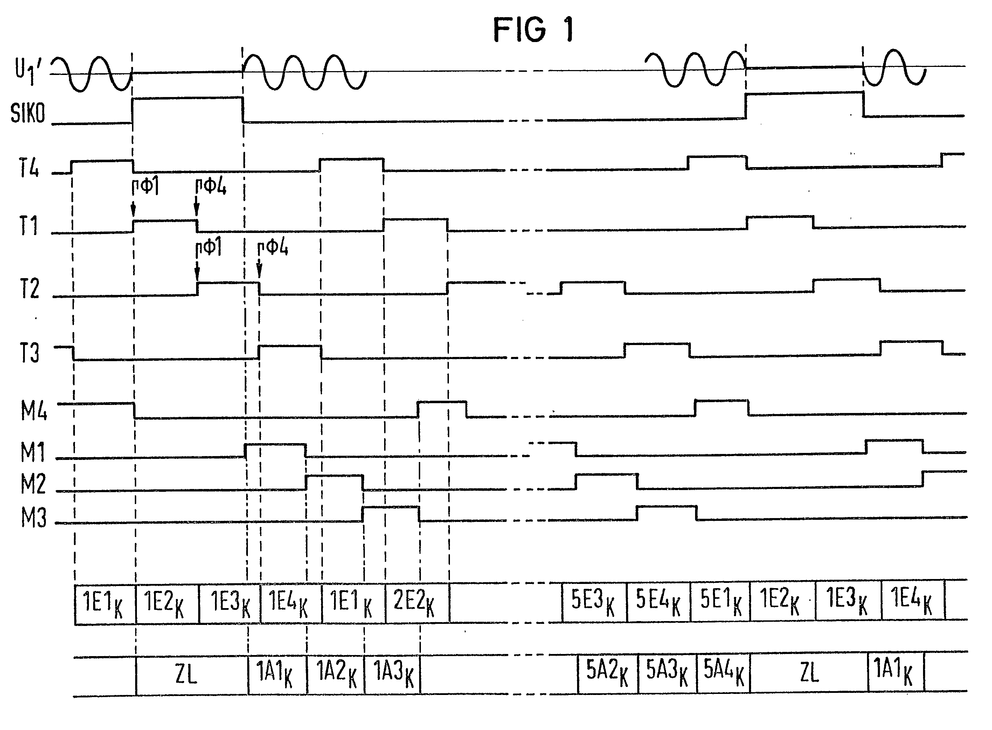

Die Zeitkompression erfolgt durch Abtasten des analogen Signals und anschließender Speicherung mit einer dem Nyquist-Theorem entsprechenden Taktfrequenz. Das Auslesen aus dem Speicher erfolgt mit einer geringfügig höheren Taktfrequenz, so daß nach dem Auslesen des Speichers eine Zeitlücke für die Begleitsignale entsteht, in der keine Signalinformation vorhanden ist. In Fig. 1 ist über der Zeitachse ein vollständiger Zyklus aufgetragen, in welcher die erforderliche Zeitlücke ZL abgeleitet wird. Zum Speichern des abgetasteten Signals werden – wie in der unten beschriebenen Schaltungsanordnung – vier Speicher eingesetzt.

Folgende Kennzeichnungen der Einlese- und Auslesezeiten werden verwendet: Die Einlesevorgänge werden mit E und die Auslesevorgänge mit A gekennzeichnet. Die auf diesen Buchstaben folgende Ziffer gibt die Nummer des betreffenden Speichers an. Die vor dieser Kombination stehende Ziffer gibt an, zum wievielten Male innerhalb des Zyklus auf diesen Speicher zugegriffen wurde. Der Index E bzw. K verweist auf die Expansion bzw. Kompression. Beispielsweise bedeutet die Bezeichnung $3E1_K$, daß der Speicher 1 während der Kompression zum dritten Mal eingelesen wird.

Wie die vorletzte Zeile der Figur zeigt, werden die vier Speicher in einer vorgegebenen Reihenfolge nacheinander eingelesen. Dieser Vorgang wird innerhalb eines Zyklus ununterbrochen fünfmal wiederholt. Auf diese Weise ist sichergestellt, daß keine Information beim Einlesen verloren geht.

Das Auslesen, auf welches die letzte Zeile der Figur Bezug nimmt, erfolgt nach einer vorgegebenen Zeitverzögerung. Im wiedergegebenen Beispiel wird der erste Speicher ausgelesen, während gleichzeitig der dritte und vierte Speicher eingelesen wird. Durch diese zeitliche Verschiebung ist sichergestellt, daß das Einlesen eines Speichers durch den Auslesevorgang nicht unterbrochen ist.

Die Speicher werden in der selben Reihenfolge ohne Unterbrechung nacheinander ausgelesen. Durch die höhere Taktfrequenz beim Auslesen werden die dazu jeweils benötigten Zeiten verkürzt, so daß die ursprüngliche Verzögerung zwischen Einlesen und Auslesen eines Speichers mit zunehmender Wiederholung verkürzt wird. Am Ende des Zyklus wird beispielsweise der Speicher 4 unmittelbar nach dem Einlesen wieder ausgelesen (siehe $5E4_K$ und $5A4_K$).

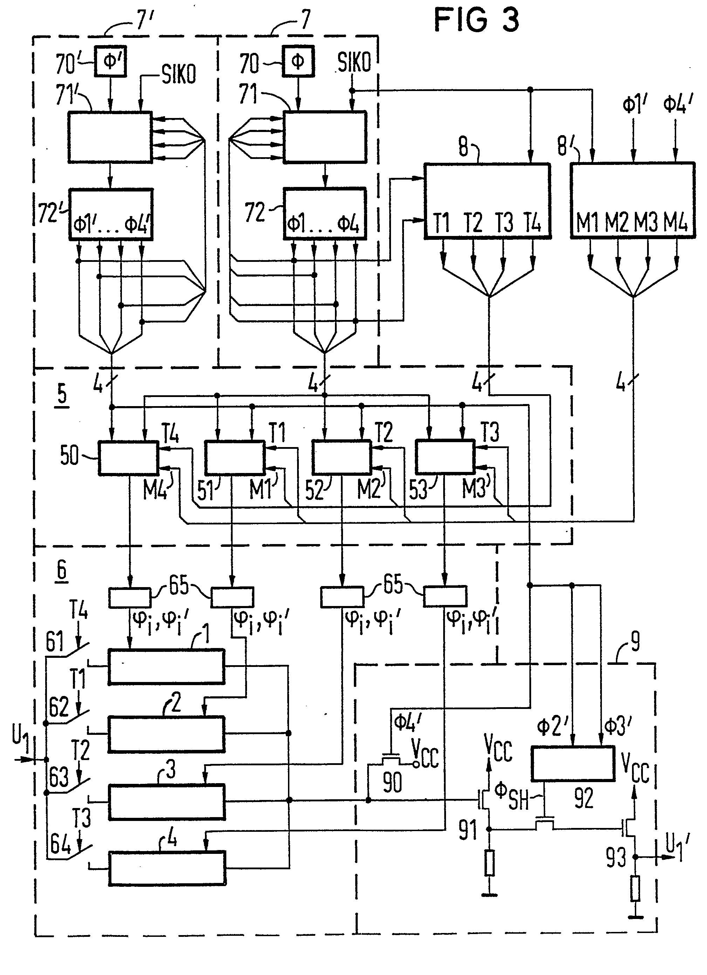

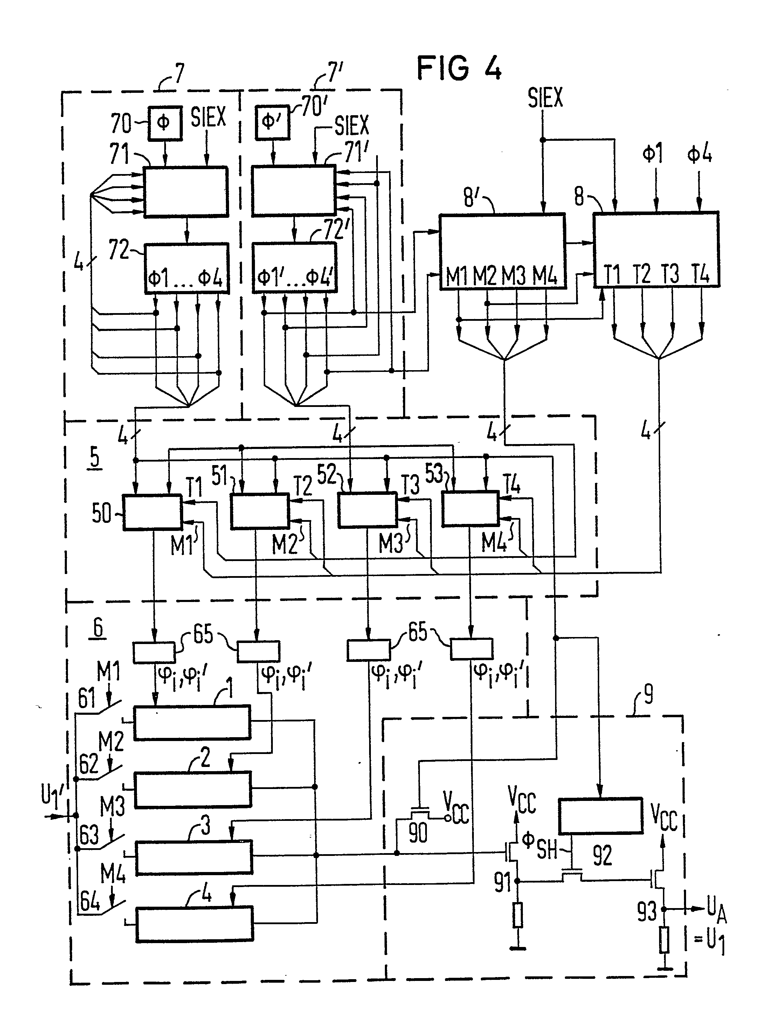

Die erste Zeile der Fig. 1 zeigt ein analoges Signal, welches der Zeitkompension unterworfen ist. In der zweiten Zeile ist der Verlauf eines die Kompandierung betreffenden Synchronisiersignals SIKOM dargestellt. Seine steigende Flanke legt den Beginn des Einlesevorgangs und seine fallende Flanke den Beginn des Auslesevorgangs fest, so daß seine Dauer die Länge der Zeitlücke ZL bestimmt. Die darunterliegenden Zeilen zeigen jeweils Einlesesteuertakte T1, T2, T3, T4 und den Verlauf von Auslesesteuertakten M1 bis M4, deren Bedeutung im Zusammenhang mit der Beschreibung der Figuren 3 und 4 erläutert wird.

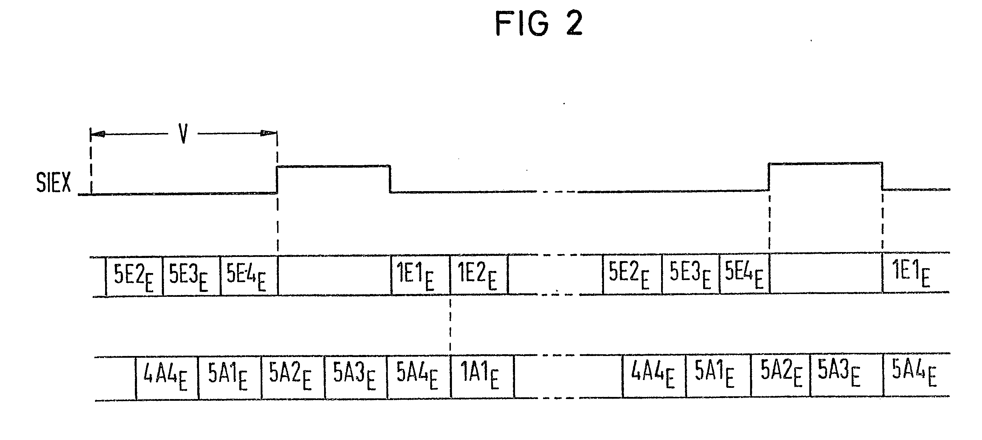

In Fig. 2 ist das Schema der Zeitexpansion auf der Empfängerseite wiedergegeben. Ein weiteres Synchronisiersignal SIEX bestimmt dabei die Länge der Zeitlücke auf der Empfängerseite. Gesteuert von seiner fallenden Flanke wird der Einlesevorgang für die Speicher eingeleitet. In dem wiedergegebenen Beispiel sind wieder vier Speicher verwendet, die in Übereinstimmung mit Fig. 1 bezeichnet sind. Das kompandierte Signal wird mit der der Sendefrequenz entsprechenden höheren Taktfrequenz abgetastet und ohne Unterbrechung während eines Zyklus nacheinander in einer vorgegebenen Reihenfolge in die einzelnen Speicher 1 bis 4 eingelesen. Zur Rückgewinnung des ursprünglichen Signals werden diese Speicher dann mit der ursprünglich zum Einlesen auf der Sendeseite verwendeten langsameren Taktfrequenz ausgelesen und lückenlos zusammengesetzt. Das in der Zeitlücke mit übertragene Begleitsignal wird nicht gespeichert. Die zeitliche Verzögerung zwischen der Sender- und Empfängerseite ist durch die Signallaufzeiten auf dem Übertragungsweg bedingt. Auf die Wiedergabe der Steuertakte wird in Fig. 2 aus Gründen der Übersichtlichkeit verzichtet. Sie sind jedoch ohne weiteres mit Hilfe der Fig. 1 nachvollziehbar.

Die Anordnung in Fig. 3 dient dazu, die in Fig. 1 prinzipiell beschriebene Zeitkompandierung auszuführen. Für die in Fig. 2 beschriebene Zeitexpansion eignet sich eine Anordnung nach Fig. 4. Beide Anordnungen sind im wesentlichen identisch, lediglich die erforderlichen Takte und Steuersignale sind der Betriebsweise entsprechend unterschiedlich. Gleiche Einheiten weisen in beiden Figuren gleiche Bezugszeichen auf.

Jede Anordnung enthält zwei Taktversorgungen 7, 7', eine Multiplexeranordnung 5, eine Speicheranordnung 6, eine Ausleseschaltung 9 sowie eine erste und zweite Multiplexer-Steuerung 8, 8'.

Die Taktversorgungen 7, 7' bestehen jeweils aus einem Taktgenerator 70, 70' mit einem ersten (schnelleren) bzw. einem zweiten (langsameren) Takt Ø bzw. Ø' und aus einem Phasenregelkreis, welcher eine Synchronisiereinheit 71, 71' und einen Teiler 72, 72' aufweist. An dessen Ausgang sind vier zum Betreiben der Speichereinheit 6 erforderliche, vom Takt Ø (bzw. Ø') abgeleitete Schiebetakte Ø1 bis Ø4 (bzw. Ø1' bis Ø4') anhängig. Die Phasenregelkreise dienen zum Einphasen der Schiebetakte und des zugehörigen Synchronisiersignales SIKO bzw. SIEX. Der Takt Ø und somit die abgeleiteten Schiebetakte Ø1 bis Ø4 sind langsamer als der Takt Ø' und die davon abgeleiteten Schiebetakte Ø1' bis Ø4'. Die erstgenannten dienen zum Betreiben der Speicheranordnung 6 auf der Senderseite während des Einlesevorgangs und auf der Empfängerseite während des Auslesevorgangs. Mit den zuletztgenannten Schiebetakten wird die Speicheranordnung 6 senderseitig während des Auslesevorgangs und empfangsseitig beim Einlesen betrieben. Die Ausgänge der beiden Taktversorgungen 7, 7' sind so mit den Dateneingängen der Multiplexeranordnung 5 verschaltet, daß abhängig von den Taktsteuersignalen entweder die Schiebetakte Ø1 bis Ø4 oder die Schiebetakte Ø1' bis Ø4' an die Speicheranordnung 6 durchgeschaltet werden.

Die Multiplexeranordnung 5 besteht aus vier parallelen Multiplexern 50, 51, 52, 53 die jeweils alternativ von einer der Steuerungen 8' bzw. 8 angesteuert werden.

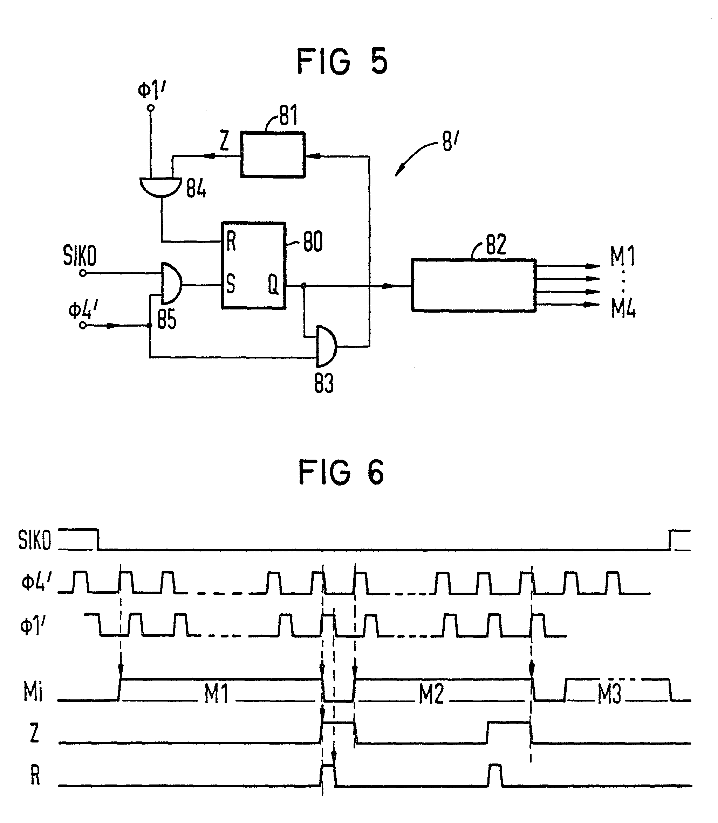

Die Einlesetaktsteuersignale Ti werden in den Taktgeneratoren 8, 8' durch eine Teileranordnung aus den Takten Ø bzw. Ø' und den Schiebetakten Ø1 und Ø4 bzw. Ø1' und Ø4' abgeleitet. Im Ausführungsbeispiel sind die Flanken der Taktsteuersignale auf die Flanken der Schiebetakte synchronisiert. Die Dauer ist auf 12 Takte des Taktes Ø1 bis Ø4 festgelegt. In Fig. 5 ist ein Beispiel zur Realisierung der Multiplexersteuerung 8' wiedergegeben. Sie besteht aus einem RS Flipflop 80, aus einem Modulo-12-Zähler 81, aus einem eins-ausvier-Decoder 82 und aus drei UND-Gattern 83, 84, 85. Der Zähler 81 liefert nach dem Abzählen von 12 Impulsen des Taktsignals Ø4', ein kurzes Signal Z, das in der Verknüpfung mit dem Schiebetakt Ø1' den Flipflop-Ausgang Q zurücksetzt. Von diesem Ausgang werden die aufeinanderfolgenden Einlesetaktsteuersignale Ti dem Decoder 82 zugeführt. Fig. 6 zeigt über der Zeit die Spannungsverläufe der Ein- und Ausgangssignale des Flipflops 80 sowie der gesamten Schaltung nach Fig. 5.

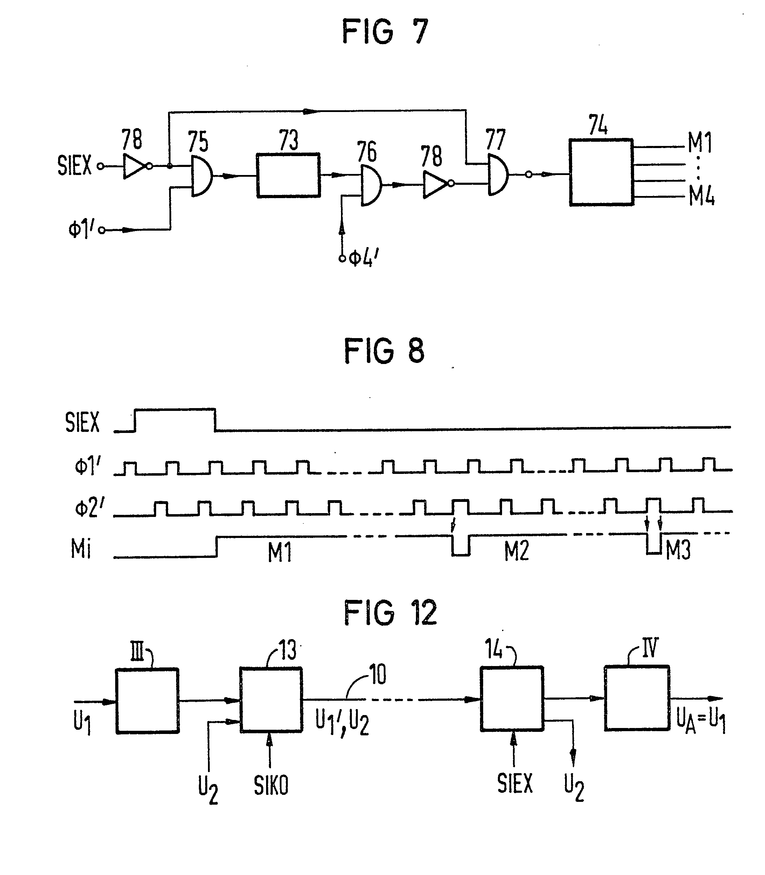

In Fig. 7 ist beispielhaft eine Ausführung der Multiplexersteuerung 8' gezeigt zur Erzeugung der Auslese-Taktsteuersignale Mi. Sie weist zwei Inverter 78, einen Modulo-12-Zähler 73, einen einaus-vier-Decoder 74 und drei UND-Glieder 75, 76, 77 auf. Die Funktion der Schaltung ist aus dem nachfolgenden Impulsdiagramm der Fig. 8 entnehmbar. Beim Auslesen sind alle Schalter 61 bis 64 geöffnet.

Die Speicheranordnung 6 besteht im Ausführungsbeispiel aus CCD-Elementen mit vier parallelen Kanälen (Speicher 1, 2, 3, 4) im Vierphasenbetrieb. Jeder Kanal besteht aus hintereinander geschalteten Speicherzellen, die bekanntlich wiederum aus einer reihenförmigen, engen Anordnung von vier MOS-Kondensatoren bestehen, über welche unter dem Einfluß von vier CCD-Taktspannungen φ1 bis φ4 bzw. φ1' bis φ4' Ladungspakete transferiert werden. Unter einer der Kondensatorelektroden wird schließlich die Signalladung in einem sog. Potentialtopf gespeichert.

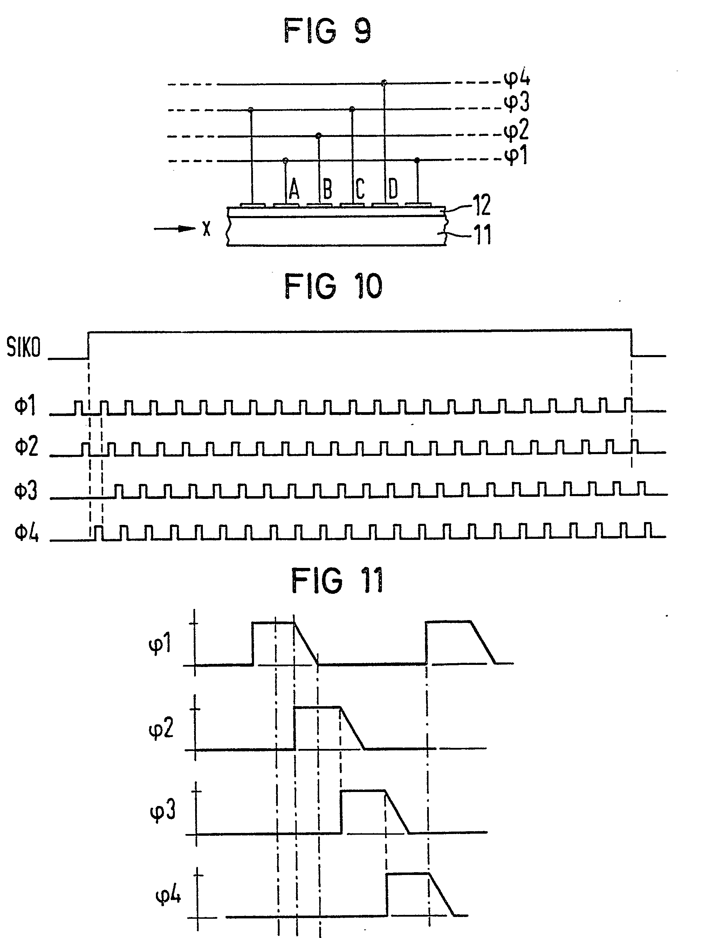

Fig. 9 zeigt eine an sich bekannte CCD-Speicherzelle zum Betreiben im Vierphasenbetrieb, bestehend aus einem Siliciumsubstrat 11, einer SiO$_2$-Schicht 12 und vier MOS-Kondensatorelektroden A, B, C, D. Mit «X» ist die Ladungstransportrichtung bezeichnet. Aus dem Impulsdiagramm der Fig. 10 ist die Art und Weise zu entnehmen, wie die Speicherzellen bzw. die vier Kanäle 1, 2, 3, 4 mit CCD-Taktsignalen φ1 bis φ4 zu beaufschlagen sind. Bekanntlich sollen diese Signale zu diesem Zweck in der dargestellten Weise überlappen und eine allmählich fallende Flanke aufweisen. Diese Bedingung wird dadurch erreicht, daß vor den Speichern 1 bis 4 entsprechend beschaltete Treiber 65 vorgesehen sind.

Zur Ausführung der Erfindung sind jedoch auch andere Arten von Schieberegistern verwendbar. Wesentlich für die Ausführbarkeit ist, daß auf der Senderseite ein Eingangssignal U1 mit dem ersten Schiebetakt eingelesen und nach einer Verzögerungszeit mit dem schnelleren Schiebetakt ausgelesen werden. Entsprechend muß auf der Empfängerseite schneller eingelesen und langsamer ausgelesen werden.

Die der Speicheranordnung nachgeschaltete Ausleseschaltung 9 besteht aus einem über den Schiebetakt Ø4' gesteuerten Tor 90, welches ein Zurückfließen der Ladung in die Speicheranordnung 6 verhindert, aus einem nachgeschalteten Source-Folger 91, zwischen dessen Ausgang und einer Ausgangsstufe 93 eine Sample- und Hold-Anordnung 92 liegt. Diese besteht aus einem Tor, welches mit einem Takt ØSH gesteuert wird, welcher aus den beiden Schiebetakten Ø2, Ø3 bzw. Ø2', Ø3' abgeleitet wird.

Im folgenden wird anhand der Figuren die Funktion der Anordnung beschrieben. Auf der Senderseite beginnt der Einlesevorgang des einen, hier analogen Signales U1 mit der positiven Flanke des ersten Synchronisiersignals SIKO. Daraufhin wird über den Steuertakt T1 der zugeordnete Multiplexer 51 so angesteuert, daß die niederfrequenteren Schiebetakte Ø1' bis Ø4' an den CCD-Kanal 2 durchgeschaltet werden. Gleichzeitig wird ein vor dem Speicher 2 liegender Schalter 62 geschlossen, um das Signal U1 durchzuschalten. Alle anderen vor den übrigen Speichern 1, 3, 4 liegenden Schalter 61, 63, 64 sind nicht angesteuert, d.h. sie sind geöffnet. Durch die Ansteuerung der Schiebetakte Ø1' bis Ø4' wird das in der CCD-Anordnung abgetastete und das in Signalladungen gewandelte Signal U1 gespeichert. Mit dem Ende des Schiebetaktes T1 beginnt der nächste Schiebetakt T2, wobei in der eben beschriebenen Weise der Schalter 63 geschlossen und die übrigen Schalter geöffnet werden. Auf diese Weise werden alle Multiplexer 51 bis 54 und alle Schalter 61 bis 64 nacheinander angesteuert und das Signal U1 in den Speichern 1 bis 4 ohne Unterbrechung gespeichert. Frühestens mit Beginn des Synchronisiersignals SIKO wird das andere, hier digitale Begleitsignal U2 auf der Übertragungsstrecke übertragen. Diese Übertragung wird spätestens mit der fallenden Flanke des Synchronisiersignals SIKO beendet. Dieses löst den Beginn des Taktsteuersignals M1 aus. Dieses wiederum steuert den zugeordneten Multiplexer 50 in der Weise an, daß die höherfrequenten Schiebetakte Ø1 bis Ø4 an den Speicher 1 durchgeschaltet werden. Über das Tor 90 gelangt der Ladungs/Spannungs/-gewandelte Speicherinhalt in die Sample- und Hold-Schaltung 92 und ist dann an der Ausgangsstufe 93 abgreifbar, von deren Ausgang das Ausgangssignal U1' unter Beimischung des Begleitsignals U2 auf den Sender bzw. die Übertragungsstrecke gegeben wird. Bis zum Auftreten der steigenden Flanke des Synchronisiersignals SIKO werden auf diese Weise alle Speicher 1 bis 4 zyklisch ausgelesen.

Auf der Empfängerseite wird beim Auftreten der steigenden Flanke des Synchronisiersignals SIEX das analoge Begleitsignal U2 aus dem empfangenen Datenstrom entnommen. Mit der fallenden Flanke beginnt der im Zusammenhang mit Fig. 2 beschriebene Einlesevorgang, jedoch mit den höher frequenteren Schiebetakten Ø1' bis Ø4' und den Taktsteuersignalen M1 bis M4. Das Auslesen auf der Empfängerseite beginnt unmittelbar nachdem der Einlesevorgang des Speichers 1 beendet ist mit dem Auslesen dieses Speichers. Es erfolgt mittels der Beaufschlagung mit den Schiebetakten Ø1 bis Ø4 und den Taktsteuersignalen T1 bis T4. Das Ausgangssignal $U_A$ der Schaltung ist gegenüber dem übertragenen Signal U1' zeitexpandiert. Da die in der Speicheranordnung 6 zwischengespeicherten Signalabschnitte lückenlos zusammengesetzt sind, entspricht es unverändert dem ursprünglichen Eingangssignal U1.

Fig. 12 veranschaulicht das vollständige Übertragungsverfahren. Das erste Signal U1 in der einen Informationsart wird senderseitig zuerst dem Kompressor III (beschrieben in Fig. 3) und dann einem Wechselschalter 13 zugeführt. Dessen zweiter Eingang ist mit dem zweiten Signal U2 in der anderen Informationsart beaufschlagt. Gesteuert vom Synchronisiersignal SIKO wird – wie oben beschrieben – das Signal U1 und in der Zeitlücke ZL das Signal U2 durchgeschaltet und auf der Übertragsstrecke 10 an den Empfänger übermittelt. Dort wird – gesteuert vom Synchronisiersignal SIEX – in der Zeitlücke ZL das zweite Signal U2 aus dem Signalfluß 41', 42' entnommen. Dann erfolgt im Expander IV (beschrieben in Fig. 4) die Rückgewinnung des ersten Signals U1, das als Ausgangssignal $U_A$ abgreifbar ist.

**Patentansprüche**

1. Verfahren zum Übertragen zweier unabhängiger Informationsarten, wobei senderseitig ein erstes Signal (U1) der einen Informationsart zur Erzeugung einer Zeitlücke (ZL), kompandiert und anschließend auf einer Übertragungsstrecke (10) übertragen wird und ein zweites Signal (U2) der anderen Informationsart in der Zeitlücke (ZL) auf der gleichen Übertragungsstrecke (10) übertragen wird, und wobei empfangsseitig das zweite Signal (U2) aus dem übertragenen Signalfluß entnommen und das erste Signal (U1) durch Zeitexpansion zurückgewonnen wird, wobei senderseitig das erste Signal (U1) abgetastet und abschnittweise, ununterbrochen zyklisch unter Steuerung eines ersten Taktes (Ø) zwischengespeichert und unter Steuerung eines zweiten schnelleren Taktes (Ø') aus der Speicheranordnung (6) ausgelesen wird, und wobei empfangsseitig das erste Signal (U1') unter Steuerung des zweiten Taktes (Ø') und unter Erzeugung der Zeitlücke (ZL) zwischengespeichert und unter Steuerung des ersten Taktes (Ø) ununterbrochen ausgelesen wird, dadurch gekennzeichnet, daß die Zwischenspeicherung über eine Verschiebung von Ladungen in mindestens vier parallelen Kanälen (1 bis 4) mit Hilfe einer gleichgroßen Anzahl Schiebetakten (Ø1 bis Ø4, Ø1'–Ø4') erfolgt und die Speicheranordnung (6) über eine Multiplexeranordnung (5) wechselweise mit den vom ersten Takt (Ø) bzw. zweiten Takt (Ø') abgeleiteten Schiebetakten (Ø1–Ø4) beaufschlagt ist, wobei die Multiplexersteuersignale (T1–T4, M1–M4) ebenfalls vom ersten bzw. zweiten Takt (Ø, Ø') abgeleitet sind, und daß sender- und empfangsseitig je ein Synchronisiersignal (SIKO, SIEX) von der Dauer der Zeitlücke (ZL) vorgesehen ist, dessen steigende Flanke senderseitig den Beginn und empfangsseitig das Ende des Einlesens in die Speicheranordnung (6) festlegt und dessen abfallende Flanke senderseitig den Beginn des Auslesens aus der Speicheranordnung (6) und empfangsseitig den Beginn des Einlesens in die Speicheranordnung (6) festlegt, während empfangsseitig das Auslesen unmittelbar nach dem Ende des Einlesens in die erste Speicherzelle beginnt.

2. Anordnung zur Durchführung des Verfahrens nach Anspruch 1, dadurch gekennzeichnet, daß senderseitig eine Speicheranordnung (6) mit mindestens vier unabhängig betreibbaren parallelen Ladungsverschiebe-Speicherbereichen (1–4) vorhanden ist, daß zwischen einer von einem Synchronisiersignal (SIKO) gesteuerten Taktversorgung (7, 7') und der Speicheranordnung (6) eine Multiplexeranordnung (5) liegt, welche die Speicherbereiche (1 bis 4) innerhalb eines Zyklus mit einem ersten und anschließend mit einem schnelleren Schiebetakt (Ø1–Ø4, Ø1'–Ø4') verbindet und daß empfangsseitig eine Speicheranordnung (6) mit einer der Sendeseite entsprechenden Anzahl voneinander unabhängig betreibbarer paralleler Ladungsverschiebe-Speicherbereiche (1–4) vorhanden ist, daß zwischen einer von einem zweiten Synchronisiersignal (SIEX) gesteuerten Taktversorgung (7, 7') und der Speicheranordnung (6) eine Multiplexeranordnung (5) liegt, die die einzelnen Speicherbereiche (1–4) innerhalb eines Zyklus zuerst mit dem schnelleren und dann mit dem langsameren Schiebetakt (Ø1'–Ø4', Ø1–Ø4) verbindet, wobei jeweils eine erste Taktversorgung (7) zur Ableitung des einen Schiebetaktes (Ø1–Ø4) und eine weitere Taktversorgung (7') zur Ableitung der höherfrequenten Schiebetakte (Ø1'–Ø4') vorhanden ist.

## Claims

1. Method for transmitting two independent kinds of information, in which at the transmitting end a first signal (U1) of the one kind of information is companded for generating a time gap (ZL) and subsequently transmitted on a transmission link (10), and a second signal (U2) of the other kind of information is transmitted in the time gap (ZL) on the same transmission link (10), and in which at the receiving end the second signal (U2) is removed from the signal stream transmitted and the first signal (U1) is reconstructed by means of time expansion, in which at the transmitting end the first signal (U1) is sampled and, section by section, is buffered in an uninterrupted cycle under the control of a first clock pulse (Ø), and is read out of the memory system (6) under the control of a second faster clock pulse (Ø'), and in which at the receiving end the first signal (U1') is biffered under the control of the second clock pulse (Ø') and with generation of the time gap (ZL), and is read out without interruption under control of the first clock pulse (Ø), characterized in that the buffering is by means of a transfer of charges in at least four parallel channels (1 to 4) with the aid of the same number of shift clock pulses (Ø1 to Ø4, Ø1' to Ø4') and the memory system (6) alternately receives shift clock pulses (Ø1–Ø4) derived from the first clock pulse (Ø) or the second clock pulse (Ø') via a multiplexer system (5), the multiplexer control signals (T1–T4, M1–M4) likewise being derived from the first or second clock pulse (Ø, Ø'), and in that there is provided at the transmitting and receiving end in each case a synchronization signal (SIKO, SIEX) of the duration of the time gap (ZL), the leading edge of which defines the beginning at the transmitting end and the end of writing into the memory system (6) at the receiving end, and the trailing edge of which defines at the transmitting end the beginning of reading out from the memory system (6) and the beginning of writing into the memory system (6) at the receiving end, while at the receiving end the reading out begins directly after the end of writing into the first memory cell.

2. System for carrying out the method according to Claim 1, characterized in that there is at the transmitting end a memory system (6) having at least four independently operable parallel charge-transfer memory areas (1–4), in that a multiplexer system (5) lies between a clock supply (7, 7') controlled by a synchronization signal (SIKO) and the memory system (6), which multiplexer system connects the memory areas (1 to 4) within a cycle to a first and subsequently to a faster shift clock pulse (Ø1–Ø4, Ø1'–Ø4'), and in that there is at the receiving end a memory system (6) having a number of mutually independently operable parallel charge-transfer memory areas (1–4) corresponding to the transmitting end, in that a multiplexer system (5) lies between a clock supply (7, 7') controlled by a second synchronization signal (SIEX) and the memory system (6), which multiplexer system connects the individual memory areas (1–4) within a cycle first to the faster and then to the slower shift clock pulse (O1'–Ø4', Ø1–Ø4), there being in each case a first clock supply (7) for deriving the one shift clock pulse (Ø1–Ø4) and a further clock supply (7') for deriving the higher-frequency shift clock pulses (Ø1'–Ø4').

## Revendications

1. Procédé pour transmettre deux types indépendants d'informations et selon lequel, côté émission, on comprime un premier signal (U1) d'un premier type d'informations pour produire un intervalle de temps vide (ZL), puis on le transmet dans une voie de transmission (10), et on transmet un second signal (U2) de l'autre type d'informations dans l'intervalle de temps vide (ZL), dans la même voie de transmission (10), et selon lequel, côté réception, on prélève le second signal (U2) à partir du flux de signaux transmis et on récupère le premier signal (U1) par expansion dans le temps, et selon lequel, côté émission, on explore le premier signal (U1) et on le mémorise temporairement par sections, et ce cycliquement de façon interrompue, sous la commande d'une première cadence (Ø), et on le lit sous la commande d'une seconde cadence plus rapide (Ø'} à partir du dispositif de mémoire (6), et selon lequel, côté réception, on mémorise temporairement le premier signal (U1') sous la commande de la seconde cadence (Ø') et tout en formant l'intervalle de temps vide (ZL) et on le lit de façon ininterrompue sous la commande de la première cadence (Ø), caractérisé par le fait que la mémorisation temporaire s'effectue au moyen d'un transfert de charges dans au moins quatre canaux parallèles (1 à 4), à l'aide d'un nombre identique de cadence de décalage (Ø1–Ø4, Ø1'–Ø4') et que le dispositif de mémoire (6) est chargé en alternance, par l'intermédiaire d'un dispositif de multiplexage (5), avec les cadences de décalage (Ø1–Ø4) dérivées de la première cadence (Ø) ou de la seconde cadence (Ø'), les signaux de commande de multiplexage (T1–T4, M1–M4) étant également dérivés de la première ou de la seconde cadence (Ø, Ø'), et que, côté émission et côté réception, il est prévu respectivement un signal de synchronisation (SIKO, SIEX), dont la durée est égale à l'intervalle de temps vide (ZL) et dont le flanc montant détermine, côté émission, le début et, côté réception, la fin de l'enregistrement dans le dispositif de mémoire (6), et dont le flanc tombant détermine, côté émission le début de la lecture à partir du dispositif de mémoire (6) et, côté réception, le début de l'enregistrement dans le dispositif de mémoire (6), tandis que, côté réception, la lecture commence dès la fin de l'enregistrement dans la première cellule de mémoire.

2. Dispositif pour la mise en œuvre du procédé suivant la revendication 1, caractérisé par le fait que, côté émission, il est prévu un dispositif de mémoire (6) comportant au moins quatre zones parallèles de mémoire (1–4) à transfert de charges, pouvant fonctionner de façon indépendante, qu'entre un dispositif (7, 7') délivrant des cadences et commandé par le signal de synchronisation (SIKO), et le dispositif de mémoire (6) se trouve disposé un dispositif de multiplexage (5), qui relie les zones de mémoire (1 à 4) au cours d'un cycle avec une première cadence de transfert ou de décalage et ensuite avec une cadence de décalage plus rapide (Ø1–Ø4, Ø1'–Ø4'), et que, côté réception, il est prévu un dispositif de mémoire (6) comportant un nombre, qui correspond au côté émission, de zones parallèles de mémoire (1–4) à transfert de charges, qui peuvent fonctionner indépendamment les unes des autres, qu'entre un dispositif (7, 7') délivrant des cadences et commandé par un second signal de synchronisation (SIEX) et le dispositif de mémoire (6) se trouve disposé un dispositif de multiplexage (5), qui relie les zones individuelles de mémoire (1–4) au cours d'un cycle tout d'abord avec la cadence de décalage plus rapide, puis avec la cadence de décalage plus lente (Ø1'–Ø4', Ø1–Ø4), un premier dispositif (7) délivrant une cadence étant prévu pour l'obtention d'une première cadence de décalage (Ø1–Ø4) et un second dispositif (7') délivrant une cadence étant prévu pour l'obtention de la cadence de décalage la plus élevée (Ø1'–Ø4').

FIG 1

FIG 2

EP 0 169 389 B1

# FIG 3

# FIG 4

# FIG 5

# FIG 6

## FIG 7

## FIG 8

## FIG 12

# FIG 9

# FIG 10

# FIG 11

19